# EUROPÄISCHE PATENTANMELDUNG

(11) **EP 0 837 380 A1**
(43) Veröffentlichungstag der Anmeldung: **22.04.1998**
(21) Anmeldenummer: 97810775.3
(22) Anmeldetag: 16.10.1997
(51) Int. Cl.: G05D 22/02, G05B 23/02

(54) **Heiz- oder klimatechnische Vorrichtung mit Typenschild**

(30) Priorität: 17.10.1996 CH 2545/96
(71) Anmelder: Axair AG, 8808 Pfäffikon SZ (CH)
(72) Erfinder: Hollinger, Urs, 4052 Basel (CH); Meier, Peter, 4416 Bubendorf (CH)
(74) Vertreter: Ullrich, Gerhard, Dr.

(57) **Zusammenfassung**

Eine Dampf-Luftbefeuchtungsvorrichtung (100) weist einen auswechselbaren Datenträger (1) mit gespeicherten Daten auf, die die verfügbare Verdampfungsleistung nach oben begrenzen. Die Dampf-Luftbefeuchtungsvorrichtung (100) ist mit einem Typenschild (2) versehen. Das Typenschild (2) ist in Abhängigkeit von den im Datenträger (1) gespeicherten Daten beschriftet und ersetzbar.

## Beschreibung

Die vorliegende Erfindung bezieht sich auf eine heiz- oder klimatechnische Vorrichtung gemäss dem Oberbegriff des unabhängigen Patentanspruchs 1.

Heiz- oder klimatechnische Vorrichtungen sind beispielsweise Heizungen oder Lüftungs-, Entfeuchtungs- oder Luftbefeuchtungsvorrichtungen. Diese Vorrichtungen weisen oft Funktionen auf, die begrenz- und/oder ausschaltbar sind. So sind z.B. Dampf-Luftbefeuchtungsvorrichtungen bekannt, bei denen die prinzipiell vorhandene Verdampfungsleistung mittels Kontaktbrücken oder mittels der Steuerungssoftware vom Hersteller oder Verteiler nach oben begrenzt wird. Die Begrenzung kann durch Versetzen der Kontaktbrücken oder durch Umprogrammieren der Steuerungssoftware wieder geändert werden.

Heiz- oder klimatechnische Vorrichtungen sind normalerweise mit einem Typenschild versehen, das Angaben über die maximale Leistung, die benötigte Stromversorgung etc. umfasst. Wird die Leistung einer heiz- oder klimatechnischen Vorrichtung z.B. über die Steuerungssoftware begrenzt, so entsprechen diese Angaben oft nicht mehr der Wirklichkeit, da das Typenschild im allgemeinen auf die Vorrichtung mit unbegrenzten Funktionen gerichtet ist.

Da das Typenschild unter Umständen dem Stromlieferanten dazu dient, die maximal vorzusehende Anschlussspannung und Lieferleistung zu bestimmen, was wiederum Auswirkungen auf die Anschlusskosten und Gebührenrechnung haben kann, bezahlt der Benutzer einer heiz- oder klimatechnischen Vorrichtung mit begrenzten oder ausgeschalteten Funktionen eventuell für Leistungen, die gar nicht benötigt werden. Er hat daher ein Interesse daran, dass die Angaben auf dem Typenschild möglichst der Vorrichtung, so wie sie eingesetzt wird, entsprechen.

Angesichts der Nachteile der bisher bekannten, oben beschriebenen Vorrichtungen liegt der Erfindung die Aufgabe zugrunde, eine heiz- oder klimatechnische Vorrichtung der eingangs erwähnten Art zu schaffen, bei der das Typenschild der Vorrichtung entspricht, so wie sie vom Benutzer einsetzbar ist.

Diese Aufgabe wird durch die erfindungsgemässe Vorrichtung gelöst, wie sie im unabhängigen Patentanspruch 1 definiert ist. Bevorzugte Ausführungsvarianten ergeben sich aus den abhängigen Patentansprüchen. Patentanspruch 9 betrifft einen Datenträger für eine derartige Vorrichtung und Patentanspruch 10 ein Verfahren zur Herstellung der Vorrichtung.

Das Wesen der Erfindung besteht darin, dass eine heiz- oder klimatechnische Vorrichtung mit mindestens einer begrenz- und/oder ausschaltbaren Funktion und einem Typenschild einen auswechselbaren Datenträger mit gespeicherten Daten aufweist, die die Begrenzung und/oder den Zustand der oder mindestens einer der Funktionen definieren, und das Typenschild in Abhängigkeit von den im Datenträger gespeicherten Daten beschriftet und ersetzbar ist.

Dank der Erfindung entspricht das Typenschild der Vorrichtung, so wie sie vom Benutzer einsetzbar ist. Ist eine Funktion vom Hersteller oder vom Verteiler begrenzt oder ausgeschaltet worden, so wird dies, falls eine entsprechende Angabe vorhanden ist, im Typenschild berücksichtigt. Eine Änderung der Begrenzung und/oder des Zustands der oder mindestens einer der Funktionen erfolgt durch Auswechseln des mit gespeicherten Daten versehenen Datenträgers. Falls nötig, wird gleichzeitig das Typenschild ersetzt.

Bei einer Ausführungsvariante der erfindungsgemässen Vorrichtung ist das Typenschild auf dem Datenträger angebracht. Der Datenträger ist bei dieser Ausführungsvariante normalerweise so an der Basisvorrichtung angeordnet, dass das Typenschild von aussen sichtbar ist. Man könnte hier auch von einem Typenschild sprechen, in dem Vorrichtungsdaten gespeichert sind.

Der Datenträger kann beispielsweise einen Speicherchip, einen Magnetspeicher, eine Lochkarte, einen Schlüssel, einen Kodierstecker oder Kontaktbrücken umfassen, die Daten elektronisch, elektrisch oder mechanisch speichern.

Erfindungsgemässe Vorrichtungen können folgendermassen hergestellt werden:
a) Herstellen einer Basisvorrichtung ohne Datenträger und Typenschild, bei der alle Funktionen bereits vorhanden sind;
b) Herstellen eines Datenträgers und Versehen dieses Datenträgers mit Daten, die die Begrenzung und/oder den Zustand der oder mindestens einer der Funktionen definieren;
c) Herstellen eines Typenschilds in Abhängigkeit von den im Datenträger gespeicherten Daten und
d) Anbringen des Typenschilds am Datenträger oder an der Basisvorrichtung und des Datenträgers an der Basisvorrichtung,
wobei die Reihenfolge der einzelnen Schritte nicht fest vorgegeben ist.

Auf diese Weise ist es möglich, nicht-spezifizierte Basisvorrichtungen herzustellen und in verschiedenen regionalen Verteilzentren zu lagern und allfällige Begrenzungen und/ oder Ausschaltungen von Funktionen erst ganz am Schluss nach Erhalt einer Bestellung durch Anbringen des Datenträgers zu definieren. Der Datenträger mit den gespeicherten Daten sowie das Typenschild können dem Benutzer auch getrennt von der Basisvorrichtung per Post zugeschickt werden. Spätere Änderungen sind damit auf einfache Weise realisierbar.

Im folgenden wird die Erfindung unter Bezugnahme auf die beigefügten Zeichnungen anhand einer Dampf-Luftbefeuchtungsvorrichtung detaillierter beschrieben. Es zeigen:

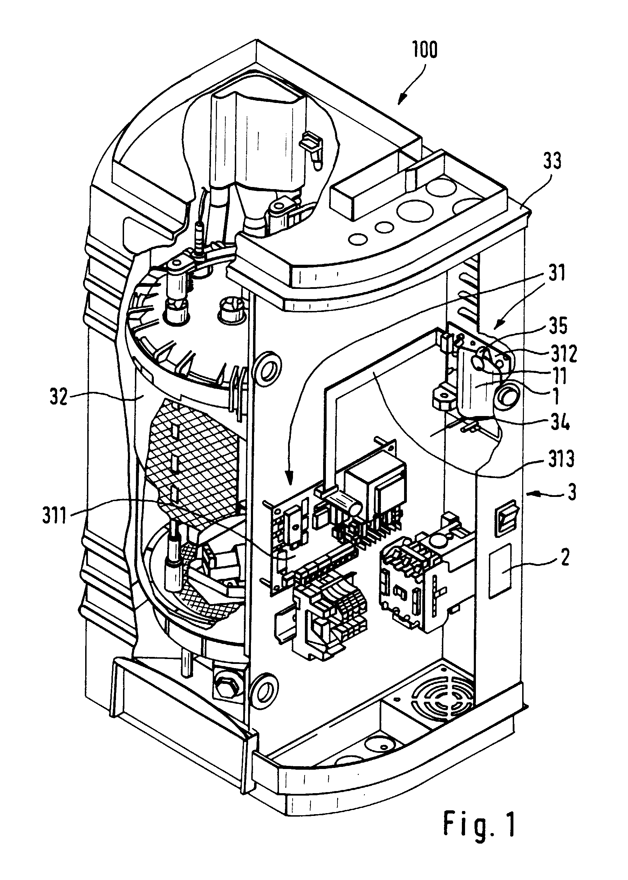

- Fig. 1 -: eine Perspektivansicht einer erfindungsgemässen Dampf-Luftbefeuchtungsvorrichtung mit einem Datenträger, der einen Speicherchip umfasst, wobei Teile des Gehäuses weggebrochen sind, und

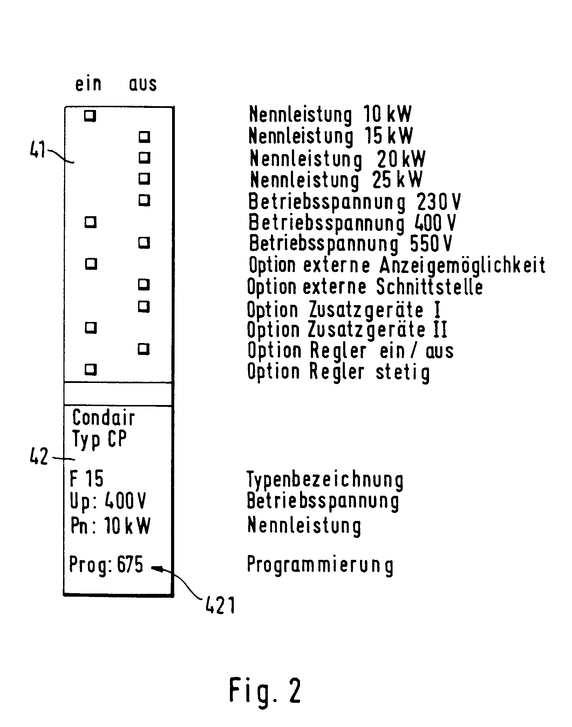

- Fig. 2 -: ein Schema einer Kodierung eines Datenträgers mit zugehörigem Typenschild.

### Figur 1

Die dargestellte elektrodenbeheizte Dampf-Luftbefeuchtungsvorrichtung 100 besteht aus einer herkömmlichen Basisvorrichtung 3, einem Datenträger 1 und einem Typenschild 2. Die Basisvorrichtung 3 umfasst unter anderem ein Gehäuse 33, ein Verdampfungsgefäss 32 und eine Steuerelektronik 31 mit zwei Leiterplatten 311, 312, die über Datenleitungen 313 miteinander verbunden sind.

Der Datenträger 1 ist an der Leiterplatte 312 mittels Klemmelementen 34, 35 ohne Werkzeug wegnehmbar angebracht. Er weist einen Speicherchip 11 auf, der mit der Leiterplatte 312 elektrisch in Verbindung steht, so dass die Steuerelektronik 31 Daten aus dem Speicherchip 11 lesen kann.

Das Typenschild 2 ist hier auf das Gehäuse 33 aufgeklebt. Bei Bedarf kann es einfach durch ein neues Typenschild überklebt werden.

Die im Datenträger 1 gespeicherten Daten dienen dazu, die verfügbare Verdampfungsleistung, auch Nennleistung genannt, nach oben zu begrenzen.

Ausserdem definieren diese Daten die Heizspannung, auch Betriebsspannung genannt, und/oder die maximale Anzahl zusammenschaltbarer Dampf-Luftbefeuchtungseinheiten. Im vorliegenden Beispiel wird die Dampf-Luftbefeuchtungsvorrichtung 100 durch eine einzige Dampf-Luftbefeuchtungseinheit gebildet.

Die Daten definieren auch, ob eine in der Steuerelektronik 31 der Dampf-Luftbefeuchtungsvorrichtung 100 vorhandene Regelfunktion und/oder eine Fehlerfernmeldungsfunktion ein- oder ausgeschaltet ist.

Selbstverständlich ist auch die Begrenzung und/oder der Zustand weiterer Funktionen definierbar, beispielsweise der Betriebszustand von Zusatzgeräten, die an die Dampf-Luftbefeuchtungsvorrichtung 100 angeschlossen werden können.

Der Speicherchip 11 kann z.B. mit einem RAM, EPROM oder EEPROM versehen sein. Mit Vorteil wird ein Speicherchip verwendet, der eine elektronisch gespeicherte Serienummer aufweist, z.B. der Chip DS1971-F5 der Firma Dallas Semiconductors, Dallas/USA. Diese Serienummer kann dann als Kontrollnummer für eine Sicherung gegen die Verwendung von kopierten Daten eingesetzt wird. Auf diese Weise wird verhindert, dass Speicherchips 11, die eine hohe Verdampfungsleistung definieren und viele Optionen zur Verfügung stellen, einfach kopiert und ihre Daten gleichzeitig an verschiedenen Vorrichtungen verwendet werden. Selbstverständlich können hierzu aber auch andere Datensicherungsverfahren eingesetzt werden.

### Figur 2

Das Schema zeigt in einem ersten Teil 41 den Ein-/Aus-Zustand verschiedener Parameter. In einem zweiten Teil 42 ist eine mögliche Beschriftung eines zugehörigen Typenschilds dargestellt.

Dem Teil 41 kann entnommen werden, dass die Nennleistung 10 kW und die Betriebsspannung 400 V eingeschaltet ist. Dies ist auch im Teil 42 angegeben.

Der Ein-/Aus-Zustand verschiedener Optionen gemäss Teil 41 ist hingegen im Teil 42, d.h. auf dem Typenschild, nicht explizit aufgeführt. Aufgrund der Angabe einer Programmiernummer 421 können aber bei Kenntnis des Kodes auch diese Zustände dem Typenschild entnommen werden.

Das Typenschild weist ausserdem zusätzliche, mit den Daten im Datenträger 1 nicht-variierbare Informationen auf, wie z.B. den Namen des Herstellers und die Typenbezeichnung.

Der Datenträger 1 kann selbstverständlich auch mittels eines anderen Kodiersystems kodiert sein.

## Patentansprüche

1. Heiz- oder klimatechnische Vorrichtung mit mindestens einer begrenz- und/oder ausschaltbaren Funktion und einem Typenschild (2), dadurch gekennzeichnet, dass sie einen auswechselbaren Datenträger (1) mit gespeicherten Daten aufweist, die die Begrenzung und/oder den Zustand der oder mindestens einer der Funktionen definieren, und das Typenschild (2) in Abhängigkeit von den im Datenträger (1) gespeicherten Daten beschriftet und ersetzbar ist.

2. Vorrichtung nach Anspruch 1, dadurch gekennzeichnet, dass das Typenschild (2) auf dem Datenträger (1) angebracht ist.

3. Vorrichtung nach Anspruch 1 oder 2, dadurch gekennzeichnet, dass der Datenträger (1) einen Speicherchip (11) umfasst.

4. Vorrichtung nach Anspruch 4, dadurch gekennzeichnet, dass der Speicherchip (11) eine elektronisch gespeicherte Serienummer aufweist, die als Kontrollnummer für eine Sicherung gegen die Verwendung von kopierten Daten eingesetzt wird.

5. Vorrichtung nach Anspruch 1 oder 2, dadurch gekennzeichnet, dass der Datenträger (1) einen Magnetspeicher, eine Lochkarte, einen Schlüssel, einen Kodierstecker oder Kontaktbrücken umfasst.

6. Vorrichtung nach einem der Ansprüche 1 bis 5, dadurch gekennzeichnet, dass sie eine Dampf-Luftbefeuchtungsvorrichtung (100) ist.

7. Vorrichtung nach Anspruch 6, dadurch gekennzeichnet, dass die im Datenträger (1) gespeicherten Daten die verfügbare Verdampfungsleistung nach oben begrenzen.

8. Vorrichtung nach Anspruch 6 oder 7, mit mindestens einer Dampf-Luftbefeuchtungseinheit, dadurch gekennzeichnet, dass die im Datenträger (1) gespeicherten Daten die Heizspannung und/oder die maximale Anzahl zusammenschaltbarer Dampf-Luftbefeuchtungseinheiten definieren und/oder definieren, ob eine in der Steuerelektronik (31) der Dampf-Luftbefeuchtungsvorrichtung (100) vorhandene Regelfunktion und/oder eine Fehlerfernmeldungsfunktion ein- oder ausgeschaltet ist.

9. Datenträger mit gespeicherten Daten für eine Vorrichtung nach einem der Ansprüche 1 bis 8.

10. Verfahren zur Herstellung einer Vorrichtung nach einem der Ansprüche 1 bis 8, dadurch gekennzeichnet, dass:
a) eine Basisvorrichtung (3) ohne Datenträger (1) und Typenschild (2) hergestellt wird, bei der alle Funktionen bereits vorhanden sind;
b) ein Datenträger (1) hergestellt und mit Daten versehen wird, die die Begrenzung und/oder den Zustand der oder mindestens einer der Funktionen definieren;
c) ein Typenschild (2) in Abhängigkeit von den im Datenträger (1) gespeicherten Daten hergestellt wird und
d) das Typenschild (2) am Datenträger (1) oder an der Basisvorrichtung (3) und der Datenträger (1) an der Basisvorrichtung (3) angebracht wird,
wobei die Reihenfolge der einzelnen Schritte nicht fest vorgegeben ist.
